(19) Europäisches Patentamt
European Patent Office
Office européen des brevets

(11) **EP 3 841 675 B1**

(12) **EUROPEAN PATENT SPECIFICATION**

(45) Date of publication and mention
of the grant of the patent:
**22.04.2026 Bulletin 2026/17**

(21) Application number: **19755655.8**

(22) Date of filing: **22.08.2019**

(51) International Patent Classification (IPC):
*H04B 1/44* (2006.01)  *H04W 52/02* (2009.01)
*G08B 25/00* (2006.01)

(52) Cooperative Patent Classification (CPC):
**H04B 1/44; H04W 52/0229; H04W 52/0245;
H04W 52/028;** G08B 25/007; G08B 29/181;
Y02D 30/70

(86) International application number:
**PCT/EP2019/072519**

(87) International publication number:
**WO 2020/039044 (27.02.2020 Gazette 2020/09)**

(54) **SECURITY MONITORING SYSTEM AND NODE THEREFOR**

SICHERHEITSÜBERWACHUNGSSYSTEM UND KNOTEN DAFÜR

SYSTÈME DE SURVEILLANCE ET NOEUD POUR CELUI-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.08.2018 FR 1857646**

(43) Date of publication of application:
**30.06.2021 Bulletin 2021/26**

(73) Proprietor: **Verisure Sàrl
1290 Versoix, Geneva (CH)**

(72) Inventor: **HEDERSTIERNA, Christer Fredrik
1290 Versoix, Geneva (CH)**

(74) Representative: **Dennemeyer & Associates S.A.
55, rue des Bruyères
1274 Howald (LU)**

(56) References cited:
EP-A1- 2 663 128      WO-A2-2009/044368
US-A1- 2010 079 278

• **DING MING ET AL: "A 2.4GHz BLE-compliant
fully-integrated wakeup receiver for latency-
critical IoT applications using a 2-dimensional
wakeup pattern in 90nm CMOS", 2017 IEEE
RADIO FREQUENCY INTEGRATED CIRCUITS
SYMPOSIUM (RFIC), IEEE, 4 June 2017
(2017-06-04), pages 168 - 171, XP033115774, DOI:
10.1109/RFIC.2017.7969044**
• **M. SPADACINI ET AL: "Wireless networks for
smart surveillance: Technologies, protocol
design and experiments", 2012 IEEE WIRELESS
COMMUNICATIONS AND NETWORKING
CONFERENCE WORKSHOPS (WCNCW), 1 April
2012 (2012-04-01), pages 214 - 219,
XP055420686, ISBN: 978-1-4673-0680-5, DOI:
10.1109/WCNCW.2012.6215493**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

The present invention relates to a security monitoring system for monitoring premises, a node and a central unit for such a system, and a method of operating a node in such a system.

**BACKGROUND**

Security monitoring systems for monitoring premises typically provide a means for detecting the presence and/or actions of people at the premises, and reacting to detected events. Commonly such systems include sensors to detect the opening and closing of doors and windows, movement detectors to monitor spaces for signs of movement, microphones to detect sounds such as breaking glass, and image sensors to capture still or moving images of monitored zones. Such systems may be self-contained, with alarm indicators such as sirens and flashing lights that may be activated in the event of an alarm condition being detected. Such installations typically include a central unit that is coupled to the sensors, detectors, cameras, etc. ("nodes"), and which processes receive notifications and determines a response. The central unit is typically linked to the various nodes wirelessly, rather than by wires, since this facilitates installation and also provides some safeguards against sensors/detectors effectively being disabled by disconnecting them from the central unit. Similarly, for ease of installation and to improve security, the nodes of such systems are typically battery rather than mains powered.

Alternatively, a security monitoring system may include an installation at a premises, domestic or commercial, that is linked to a Central Monitoring Station (CMS) where typically human operators manage the responses required by different alarm and notification types. In such centrally monitored systems, the central unit at the premises installation typically processes notifications received from the nodes in the installation, and notifies the Central Monitoring Station of only some of these, depending upon the settings of the system and the nature of the detected events. **In** such a configuration, the central unit at the installation is effectively acting as a gateway between the nodes and the Central Monitoring Station.

**In** both centrally-managed and self-contained security monitoring systems one of the most important issues, from a practical perspective, is the battery life of the nodes of the installation - that is, the battery life of the various detectors, sensors, cameras. Obviously, if a node's battery loses sufficient power, the node may be unable to sense a change of state or to contact the central unit, and consequently the security installation develops a weak spot where an intruder may gain access to the premises undetected. For centrally-managed systems it is usually the responsibility of the company running the system, rather than the premises owner or occupier, to change batteries, and obviously the shorter the battery life in nodes, the more frequently site visits need to be made and the greater the administrative cost. Consequently, controlling power consumption in the nodes is a high priority.

In some security monitoring systems there is a need for the central unit to initiate communication with the nodes. This may be handled by having the nodes wake-up synchronously and listen for a message from the central unit. The longer the nodes are allowed to sleep between wake-ups, the more power is saved. However, the longer the node sleeps, the greater the constraints on the clock of the node since it needs to accurately wake up in order not to miss its wake-up slot. Guard intervals may also be added to the wake up timing such that the node wakes up with enough margin to compensate for inaccuracy of the node clock. Consequently there is a trade-off between component cost, as more accurate clocks are more expensive than less accurate clocks, and power consumption since an inaccurate clock requires longer time spent in a wake-up state to allow sufficient time-margin to compensate for clock inaccuracy .

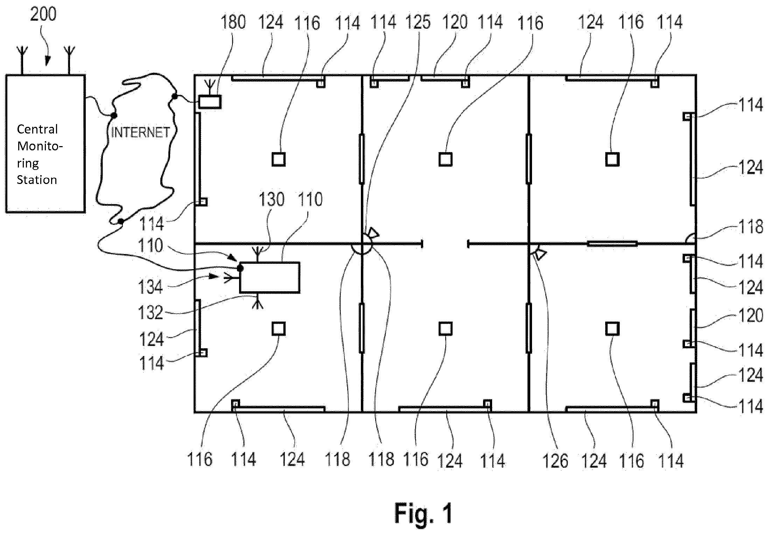

In EP2663128 a method is disclosed in which a wireless communicator in a slave unit that is synchronised with a master unit wakes itself up periodically to receive messages from the master unit. A controller of the slave unit, using an internal timer, periodically wakes the wireless communicator by powering it up. The wireless communicator then enters a reception waiting state in which it checks whether a wireless signal can be received (i.e. carrier detection). The wireless communicator sends the RSSI value of any detected wireless signal to the slave controller. If the value of the RSSI signal is above a predetermined threshold, the slave controller continues reception to acquire the message (step S4 in Figure 1), otherwise the slave controller deactivates the wireless communicator to end the reception waiting state.

One problem with the method of EP2663128 is that in reception of other wireless signals than those from the master unit, e.g. in noisy environments, the presence of the unwanted wireless signals may lead the slave wireless devices into believing that there is an RF transmission from the master unit and hence the slave wireless device may continue to use battery power even when there is no signal to be received.

US2010/079278A1 discloses a power saving wireless fire alarm system has a master station and a plurality of battery-powered fire detecting terminals linked for wireless communication with each other. Upon detection of a fire occurrence at one of the fire detecting terminals, the fire detecting terminal transmit a fire detection message to a master station which in turn transmit a wake-up message to the other fire detecting terminals and thereafter a fire information message which starts a multiple synchronous communication between the master station and the fire detecting terminals. Each fire detecting terminal has a power controller which selects an intermittent reception mode of activating its own receiver only intermittently until receiving the wake-up message or information indicative of the fire occurrence, and selects a constant operation mode thereafter to make the fire detecting terminals ready for the multiple synchronous communication commenced by the fire infor-mation message from the master station. The master station is configured to generate a wake-up message after receiving the fire detection message from any one of the fire detecting terminals. The wake-up message is configured to be destined for all the fire detecting terminals. In this instance, the transmitter of the master station is

configured to transmit the wake-up message repeatedly over a predetermined period before transmitting the fire information message in order to wake-up the fire detecting terminals from the intermittent reception mode.

DING MING ET AL: "A 2.4GHz BLE-compliant fully-integrated wakeup receiver for latency-critical IoT applications using a 2-dimensional wakeup pattern in 90nm CMOS", 2017 IEEE RADIO FREQUENCY INTEGRATED CIRCUITS SYMPOSIUM (RFIC), IEEE, 4 June 2017 (2017-06-04), pages 168-171, teaches the use of a low-power wake-up receiver (WuRx) which monitors the channel continuously, and never sleeps. This is stated to be "paired with a standard-compliant transmitter". While a monitoring state is disclosed, there is no disclosure of either a sleep state nor a receive state distinct from the monitoring state and in which both the first and second subset of elements are energised.

WO2009/044368A2 discloses wakeable wireless communications devices, and methods for waking wireless communications devices, for use in a wireless TDMA network of such devices. The devices communicate during respectively-designated timeslots of a TDMA communications protocol. The wireless devices include a wireless transceiver that communicates over the wireless network during device-designated timeslots, and that is operative in a reduced power mode during other timeslots. The wireless devices further include a wakeable wakeup detection circuit that has sleep and wakeup modes regulated by a duty cycle, synchronous with the device- designated TDMA timeslots. The duty cycle is synchronized with a TDMA protocol so that the wakeup detection circuit is operated in wakeup mode only when data packets are allowed to be received. When in wakeup mode, the wakeup detection circuit is responsive to whether data is being communicated to the device for processing. The presence of communicated data is seen by the wakeup detection circuit as a device wakeup request. When the device wakeup request is received, the wakeup detection circuit prompts a wakeup call to transition a separate signal processing circuit to a powered-up communications mode so that it can receive and process data.

From the above it is understood that there is room for improvement.

## SUMMARY

According to a first aspect of the invention there is provided a node for a security monitoring system comprising a central unit and a plurality of nodes, the node comprising a radio communication module and a controller operatively connected to the radio communication module, the radio communication module having a plurality of elements that are used in receiving and demodulating radio signals,

the node being configured to:

operate the radio communication module in a receive state, to receive and demodulate a packet, the packet including a payload; wherein:

a first subset of the plurality of elements is operable to receive a radio signal and detect an RSSI level in the received radio signal, and a second subset of the plurality of elements is operable to demodulate the received radio signal, the radio communication module being configured to operate in the receive state, in which both the first and second subset of elements are energised, and in a monitoring state in which the first but not the second subset of elements are energised, the power consumption of the radio communication module being greater in the receive state than in the monitoring state;

the node further being configured to:

operate the radio communication module in the monitoring state to detect an RSSI level and compare the RSSI level to an RSSI threshold, and if the RSSI level is above the RSSI threshold, change the radio communication module to the receive state,

perform packet analysis involving decryption of the packet payload and, if the decryption is successful, analysis of address identifiers of the packet payload to determine whether the node is an intended recipient of the packet, and, if the packet is a wakeup message from the central unit (110) with the node as an intended recipient, the node is further configured to transmit, to the central unit, a wakeup acknowledgement; .

wherein the radio communication module has a sleep state in which it consumes less power than in the monitoring state, and the node is configured periodically to cause the radio communication module to enter the monitoring state from the sleep state.

This arrangement is advantageous because it may significantly reduce long term power consumption in the nodes, so that node battery life may be significantly extended. This in turn should lower operator costs due to less frequent need for battery changes, and also improve customer security and satisfaction because the nodes of the security system should keep working for longer.

Such a node may be configured to change the radio communication module from the monitoring state to the sleep state in the event that the RSSI level is below the RSSI threshold.

Such an arrangement may enable further node energy savings.

Such a node may be further configured in the receive state to perform pre-amble qualification on the received packet and if no pre-amble is qualified, the node is configured to change to the sleep state.

Such a node may be further configured to perform sync word qualification on the received packet and if no sync word is qualified, the node is configured to change to the sleep state.

Such a node may be further configured to perform Cyclic Redundancy Check, CRC, qualification on the received packet and if no CRC is qualified, the wakeup node is configured to change to the sleep state.

The choice between these options may be made based on receiver design and ease of implementation, but each has the potential to reduce construction costs and to make possible energy savings.

In a node according to the first aspect, the RSSI threshold is a level relative to a background noise. The RSSI threshold may be a level relative to a moving average of the background noise.

In a node according to the first aspect, the radio communication module may comprise a wake-up radio unit and a transceiver, the node being configured to:

operate the radio communication module in the monitoring state using the wake-up unit; and
operate the radio communication module in the receive state using the transceiver.

The use of a wake up radio module in nodes may further reduce the energy consumption in nodes.

In any of these nodes, the radio communication module may operates within the 863 to 870MHz frequency band or within the 915MHz frequency band.

Any of these nodes may include at least one sensor.

According to a second aspect the invention provides a security monitoring system comprising a central unit including a radio frequency transceiver, and a controller for controlling the radio frequency transceiver, and a plurality of nodes each according to any variant of the first aspect;

the central unit being configured to transmit periodic wake up messages to the nodes, each wake up message including an identifier to indicate the intended recipient(s) of the message;
and , in response to receipt of a wake up acknowledgement from a node, to transmit an information message to the node from which the wake up acknowledgement was received.

As already noted, such a system may enable worthwhile reductions in node energy consumption, with consequent cost reductions and security enhancement.

In such a system the or each node may be configured to change the radio communication module from the monitoring state to the sleep state in the event that the RSSI level is below the RSSI threshold.

According to a third aspect, the present invention provides a method of operating a node in a security monitoring system comprising a central unit and a plurality of nodes, the node comprising a radio communication module and a controller operatively connected to the radio communication module,

the radio communication module having a plurality of elements that are used in receiving and demodulating radio signals, the method comprising operating the radio communication module in a receive state, to receive and demodulate a packet, the packet including a payload;
wherein a first subset of the plurality of elements is operable to receive a radio signal and detect an RSSI level in the received radio signal, and a second subset of the plurality of elements being operable to demodulate the received radio signal, the radio communication module being configured to operate in a receive state, in which both the first and second subset of elements are energised/ powered/active, and in a monitoring state in which the first but not the second subset of elements are energised/ powered/active, the power consumption of the radio communication module being greater in the receive state than in the monitoring state;
wherein the radio communication module has a sleep state in which it consumes less power than in the monitoring state, and the node is configured periodically to cause the radio communication module to enter the monitoring state from the sleep state;
the method further comprising:

operating the radio communication module in the monitoring state to detect an RSSI level and compare the RSSI level to an RSSI threshold, and

if the RSSI level is above the RSSI threshold, changing the radio communication module to the receive state, and performing packet analysis involving decryption of the packet payload and, if the decryption is successful, analysis of address identifiers of the packet payload to determine whether the node is an intended recipient of the packet,

if the packet is a wakeup message from the central unit with the node as an intended recipient,

transmitting to the central unit a wakeup acknowledgement.

The method may further comprise changing the radio communication module from the monitoring state to the sleep state in the event that the RSSI level is below the RSSI threshold.

The method according to the third aspect may further comprise, in the receive state, performing pre-amble qualification on the received packet, and if no pre-amble is qualified, changing the node to the sleep state.

The method according to the third aspect may further comprise performing sync word qualification on the received packet and if no sync word is qualified, changing the node to the sleep state.

The method according to the third aspect may further comprise performing Cyclic Redundancy Check, CRC, qualification on the received packet and if no CRC is qualified, changing the node to the sleep state.

## BRIEF DESCRIPTION OF THE DRAWINGS

Embodiments of the invention will be described, by way of example only, by reference to the following diagrammatic drawings which illustrate non-limiting examples of how the inventive concept can be reduced into practice, and in which:

Figure 1 is an overview of a security monitoring system according to an embodiment of the invention;

Figure 2 is a schematic drawing showing in more detail features of the gateway or central unit of Figure 1;

Figure 3 is a schematic drawing showing features of a node of the security monitoring system according to an embodiment of the invention;

Figure 4 shows the structure of a typical packet of a communication protocol that may be used in embodiments of the invention;

Figure 5 shows signal flow in relation to a communication session with a non-wakeup node that may be used in embodiments of the invention;

Figure 6 shows signal flow in relation to a wakeup node that may be used in embodiments of the invention;

Figure 7 illustrates the behaviour of a wakeup node in relation to a wakeup slot according to an embodiment of the invention;

Figure 8 illustrates the behaviour of a wakeup node in the receive state according to an embodiment of the invention;

Figure 9 illustrates the beviour of a wakeup node during packet analysis according to an embodiment of the invention; and

Figure 10 shows a block diagram of a prior art RF transceiver.

## DETAILED DESCRIPTION OF EMBODIMENTS

Hereinafter, certain embodiments of the invention will be described more fully with reference to the accompanying drawings. The invention may, however, be embodied in many different forms and should not be construed as limited to the embodiments set forth herein; rather, these embodiments are provided by way of example so that this disclosure will be thorough and complete, and will fully convey the scope of the invention, such as it is defined in the appended claims, to those skilled in the art.

Specific description

Figure 1 is an overview of a security monitoring system according to a first aspect of the invention. The figure shows a stylised domestic installation 100 of a monitoring system according to an embodiment of the invention, and a monitoring centre (Central Monitoring Station) 200 that supports the domestic installation. The installation 100 includes a gateway or central unit, 110, which is connected to the monitoring centre 200 by means of a data connection 150. The data connection 150 may be provided over a phone line, a broadband internet connection, Ethernet, a dedicated data connection, or wirelessly, for example using an LTE or GSM network, and in general multiple of these options will exist for any installation, so that there is security of connection between the gateway 110 and the monitoring centre 200. For additional security, the central unit 110, or a sensor in communication with the central unit 110 and the monitoring centre may both be provided with means to support an ISM radio connection, for example in the European 863 to 870MHz frequency band, preferably one configured to resist jamming.

The domestic installation 100 involves a typical arrangement where the exterior doors 120 and windows 124 are fitted with sensors 114, for example magnetic contact sensors, to detect opening of the door or window. Each of the rooms of the building having the installation is provided with a combined fire/smoke detector 116. In addition, several rooms have movement detectors 118, such as pyroelectric infrared (PIR) detectors, to detect movement within an observed zone within the room. The front door 120 of the building leads into a hall which also has internal doors to various rooms of the house. The hall is monitored by a video camera 125 having an associated motion detector. Similarly, the kitchen which is entered from the back door 121 is monitored by a video camera 126 which includes a motion detector. Each of the sensors, detectors and video cameras, which may throughout this specification be referred to

generically as nodes, includes a wireless interface by means of which it can communicate with the central unit 110. The central unit 110 includes a first antenna 130 and optionally a second antenna 132 for communication with the sensors, detectors and video cameras. In addition, the central unit 110 may include at least one further antenna 134 for wireless communication with the monitoring centre. Each of these antennas may be connected to a corresponding transceiver, not shown. Additionally, the central unit 110 may include a dedicated antenna arrangement for Wi-Fi, for example to connect to a domestic Wi-Fi access point 180. The Wi-Fi access point may also provide one of the means of access to the monitoring centre 200. Optionally, the central unit 110 may itself function as a Wi-Fi access point, with a connection (e.g. a wired connection) to an Internet service provider, to provide Wi-Fi coverage within the building in place of the Wi-Fi access point 180.

In the present disclosure, the expression Wi-Fi refers to elements, systems, devices or methods compliant with any variant of the 802.11 standard. Conversely, systems, devices and elements referred to as ISM should not be taken to embrace Wi-Fi.

Some installations may include more than one central unit (CU), for example two central units, to provide a failsafe backup. In general in such multi CU installations the two CUs work together in parallel. However, in some installations the two CUs may work in parallel in communication with some of the nodes of the domestic installation and individually in communication with other nodes of the domestic installation. The latter may be the case when CU is used as a range extender in domestic installations covering larger installations. Although the two CUs work in parallel, any node is only logged into one of the CUs at a time, and that CU is responsible for all communication with the node, but the other CU can hear all and understand all communication between the other two - if it is not a range extension scenario.

In a domestic installation 100, the Central Unit 110 typically has knowledge of all nodes comprised in the installation 100. Each node may have a unique node identifier or serial number that is used to identify the node. Each node may have different functionalities associated with it, such as e.g. video capabilities, motion detection, still imaging, audio recording, communication speeds etc. Some or all capabilities may be communicated from the node to the Central Unit during a login procedure during setup of the installation 100. Alternatively and/or additionally, some or all capabilities may be communicated to the Central Unit from the node upon request from the Central Unit 110. Alternatively and/or additionally, some or all capabilities may be retrieved, by the Central Unit 110, from the CMS 200.

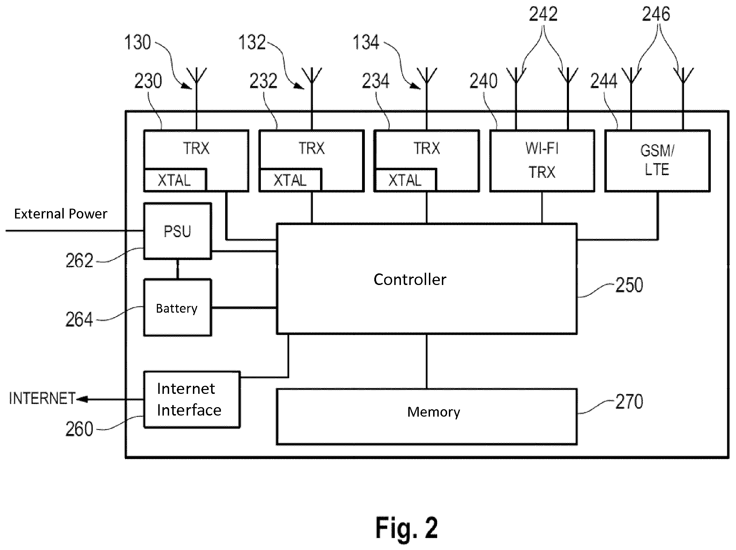

Figure 2 is a schematic drawing showing in more detail features of the gateway or central unit 110 of Figure 1. The gateway 110 includes a first transceiver 230 coupled to the first antenna 130, and optionally a second transceiver 232 coupled to a second antenna 132. The transceivers 230 and 232 can both transmit and receive, but a transceiver cannot transmit and receive simultaneously. The transceivers 230, 232 each operate in half duplex, typically using the same frequency for transmission as for reception. Typically the two transceivers will operate on different frequencies, but if they transmit simultaneously they may both operate on the same frequency to provide a measure of diversity, and similarly for simultaneous reception. The transceivers 230 and 232 are coupled to a controller 250 by a bus. The controller 250 is also connected to a network interface 260 by means of which the controller 250 may be provided with a wired connection to the Internet and hence to the monitoring centre 200. The controller 250 is also coupled to a memory 270 which may store data received from the various nodes of the installation - for example event data, sounds, images and video data. The gateway 110 includes a power supply 262 which is coupled to a domestic mains supply, from which the gateway 110 generally derives power, and a backup battery pack 264 which provides power to the gateway in the event of failure of the mains power supply. Optionally, as shown, the central unit 110 includes a Wi-Fi transceiver 240, and associated antenna arrangement 242, which may be used for communication with any of the nodes that is Wi-Fi enabled. The Wi-Fi enabled node may be a remote control (preferable one with user-changeable batteries, like a TV remote control) or control panel (that may be connected to the mains power supply, with battery backup, so that it is not dependent on battery power) that may for example be located close to the main entrance to the building to enable the occupier to arm or disarm the system from near the main entrance. In general, however, with systems according to the invention we want to avoid using Wi-Fi (802.11) transceivers in nodes, because Wi-Fi is rather power hungry, for many reasons, and for nodes reliant on battery power this is likely to reduce useful battery life too much. Similarly, an interface enabling bidirectional communication over a Public Land Mobile Network (PLMN), such as GSM or LTE, may optionally be provided, and one is shown in the Figure as interface 244 and antenna arrangement 246. Optionally, a third antenna 134 and associated ISM transceiver 234 may be provided for communication with the monitoring centre 200 over, for example, the European 863 to 870MHz frequency band.

The first and second transceivers may both be tuneable ISM devices, operating for example in the European 863 to 870MHz frequency band or in the 915MHz band (which may span 902-928MHz or 915-928MHZ depending upon the country). In particular, both of these devices may be tuned, i.e. may be tuneable, to the frequencies within the regulatorily agreed subbands within this defined frequency band.

In order to help the understanding of some embodiments, the following sections will briefly describe some background information regarding wireless communication. Within wireless communications there are several parameters that determine the possibility of successful transmission and reception of a packet. The possibility that a packet is not successfully received and/or decoded is known as Packet Error Rate (PER) and the corresponding measure on bit level is Bit Error Rate (BER). The PER and BER are both stochastic distributions and a specified level, e.g. 2.4% BER for GSM, is defined as the sensitivity limit. The sensitivity limit may be different depending on protocol and standard. In case of ISM communications in the sub-GHz band the maximum allowed sensitivity is specified in ETSI EN300 220-1 v3.1.1. according to Eqn. 1:

$$10 * log(RBW) - 117 \, dBm \qquad \text{Eqn. 1}$$

In Eqn. 1, RBW is the bandwidth of the receiver. The maximum allowed sensitivity will increase with increased receiver bandwidth and the reason for this is that the thermal noise power N introduced by the receiver increases as the receiver bandwidth increases, Eqn. 2:

$$N = k \cdot T \cdot RBW \qquad \text{Eqn. 2}$$

Where k is Boltzmann's constant in Joules per Kelvin (approx. $1.381 \times 10^{-23}$ J/K) and T is the temperature in Kelvin. A received signal S will, with most modulation techniques, have to be above the thermal noise and a Signal to Noise Ratio, SNR, is defined in accordance with Eqn. 3:

$$SNR = \frac{S}{N} \qquad \text{Eqn. 3}$$

In digital communication, the received signal S is comprised of a series of symbols where each symbol correspond to 1 or more bits depending on the modulation order M of the modulation chosen. The number of bits per symbol n is related to the modulation order according to Eqn. 4:

$$M = 2^n \qquad \text{Eqn. 4}$$

The receiver will decode a received signal S into bits and as mentioned earlier, the sensitivity is usually defined as a BER. A better measure of the received signal quality may be a received energy per symbol $E_s$ or energy per bit $E_b$ versus noise rather than the more generic SNR. From Eqn 4. we know the relation and can formulate Eqn. 5:

$$\frac{E_b}{N} = \frac{E_s}{n \cdot N} \qquad \text{Eqn. 5}$$

One important takeaway from Eqn. 5 is that the energy per bit $E_b$ decreases with the number of bits per symbol. Further to this, the received energy per bit $E_b$ will depend on the bit-rate. If the output power is kept constant and the bit-rate is doubled, the transmission time will be halved and consequently, so will the energy per bit $E_b$. From the art, the relation between BER as a function of $E_b/N$ is known and can be accurately modelled, see e.g. "Analyze BER Performance of Wireless FSK System", Hamood Shehab Hamid et al., Microwaves & RF; Nov2009, Vol. 48 Issue 11, p80.

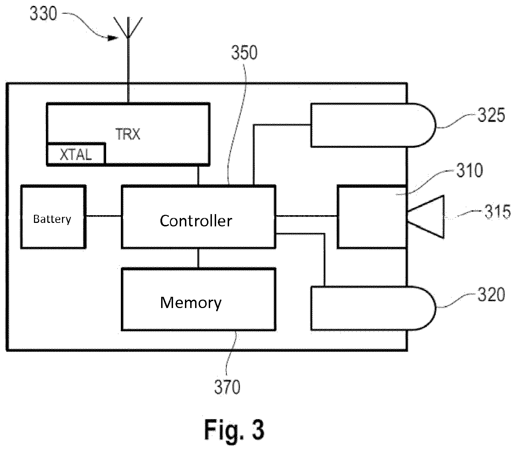

Figure 3 is a schematic drawing showing features of a node of the security monitoring system according to an embodiment of the invention. In this case the node is a video camera like the video camera 126 which is mounted in the kitchen, as shown in figure 1. The node includes a radiofrequency node transceiver 340 coupled to an antenna 330. A controller 350 is coupled to the transceiver and also to the image sensor 310 of the video camera. The controller is also coupled to an integral motion sensor 320 and to a memory 370. A battery 380 provides power to the node, in particular powering the controller, image sensor and motion detector. The video camera includes a lens arrangement 315 for forming an image on the image sensor 310. Optionally, the node includes an infrared light source 325 suitable for illuminating images detectable by the image sensor. The node transceiver 340 is tuneable. In particular, the node transceiver 340 can be tuned to frequencies to match those transmitted by or receivable by the first and second transceivers of the gateway 110.

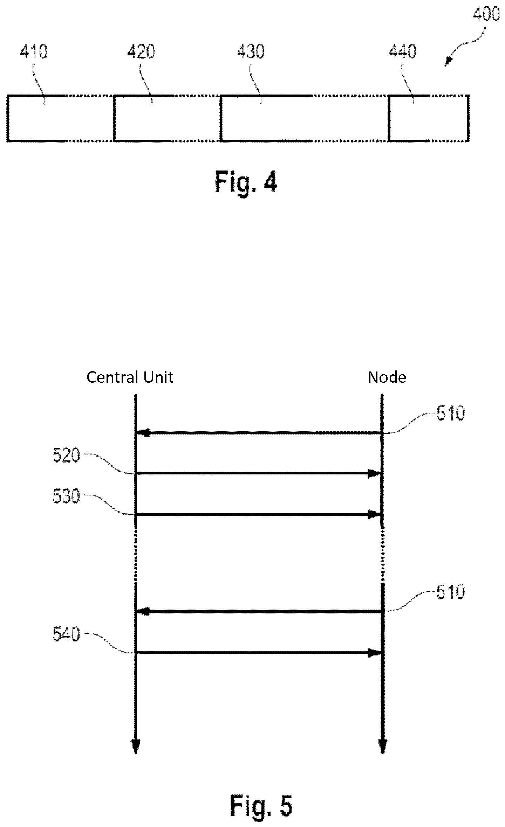

Security monitoring systems 100 according to embodiments of the invention may be built in a star topology, with the Central Unit 110 in wireless communication with all the nodes. The communication is in accordance with a communication protocol. In Fig. 4, the structure of

a typical packet 400 of a suitable communication protocol is shown. The packet 400 may comprise a pre-amble 410, a sync-word 420, a payload 430 and a Cyclic Redundancy Check 440. The payload 430 is preferably encrypted with an encryption key that is known by the recipient of the packet.

There are generally two categories of nodes, and these may be termed wakeup nodes and non-wakeup nodes. The non-wakeup nodes are nodes with which communication can be initiated only by the node itself, and not by the Central Unit. Examples of non-wakeup nodes are e.g. switches such as magnetically controlled contacts used on doors and windows. Should the Central Unit 110 need to communicate with a non-wakeup node, the Central Unit 110 has to wait until it receives a message from the non-wakeup node and acknowledge that message with a message saying that the Central Unit 110 has additional message(s) to send to the non-wakeup node. This design of the communication protocol enables non-wakeup nodes to stay in a sleep or hibernation state for extended periods of time. Consequently, they only have to wake up on e.g. external events that are communicated to the Central Unit 110 or the expiry of an internal wakeup-timer that requires a periodic communication with the Central Unit 110. The internal wakeup-timer may be configurable and is typically in the range of 5-60 minutes. The communication protocol allows for extended battery life (e.g. at least 5 years from a single small battery cell) of non-wakeup nodes.

Conversely, wakeup nodes are nodes that can be woken from a monitoring state (in which their power consumption is less than in a fully awake state) to a fully awake state by the Central Unit 110, so that the Central Unit 110 can initiate communication with wakeup nodes, albeit that this requires the wake up node to enter a partially awake state - the monitoring state - in order to be able to detect the presence of a message from the central unit. Examples of wakeup nodes, i.e. nodes that can be triggered from the Central Unit 110 include e.g. camera-PIRs, nodes with video functionality, nodes with audio functionality, etc. The wakeup nodes have to wake up (that is move from a sleep state and enter a (low power consumption) monitoring state) periodically to determine if the Central Unit 110 needs to communicate with them. Because a Central Unit generally only needs to communicate with a wakeup node rather infrequently, the battery life of wakeup nodes is largely dependent on how often they have to listen for communications from the Central Unit (110) and for how long the wakeup nodes have to stay awake before they can determine that there is no communication for them.

With reference Fig. 5, the signal flow in relation to a communication session with a non-wakeup node (a non-wakeup communication session) will be explained in further detail. The communication is initiated by the transmission from the non-wakeup node of a trigger message 510 that is received at the Central Unit, the trigger message being due to an external or an internal trigger acting on the non-wakeup node. The external trigger may be any trigger that the non-wakeup node is configured to react to, e.g. a tamper detection or, in the case of a magnet contact, the triggering of a motion sensor or reed switch. The internal triggers may be e.g. expiry of a wakeup-timer or the battery level dropping below a (configurable) threshold. In either case, the non-wakeup node transmits the trigger message 510 to the Central Unit 110, and the Central Unit 110 receives, decrypts and analyses the message.

In the signal flow of Fig. 5, the Central Unit 110 has information, data or instructions to share with the non-wakeup node and responds by sending an acknowledgement including a Listen After Talk, LAT, request 520. The acknowledgement with a LAT request 520 is received by the non-wakeup node, and the non-wakeup node, after decrypting and analysing the message, stays in a receive state waiting for an additional message(s) from the Central Unit 110. The non-wakeup node may optionally send an acknowledgement (not shown) to the Central Unit acknowledging the LAT request. The Central Unit 110 proceeds to transmit an information message 530 comprising the information, data or instructions that is wishes to share with the non-wakeup node. The non-wakeup node receives the information message 530, and after decryption and analysis of the message it may send an acknowledgement (not shown) to the Central Unit 110 confirming reception of the information message 530. Following this, the non-wakeup node reverts to a low power mode, e.g. a sleep or hibernate mode in order to conserve power. The non-wakeup node will stay in this state until the next trigger occurs at which point the non-wake-up node sends a trigger message 310, the second trigger message 510 in Fig. 5, to the Central Unit 110. In the example in Fig. 5, the Central Unit 110 has no information, data or instructions to share with the non-wakeup node and, after decryption and analysis of the second trigger message, transmits an information acknowledgement 540 to the non-wakeup node acknowledging reception of the trigger message 510. On reception of the information acknowledgement 540, the wakeup node goes back into its low power mode.

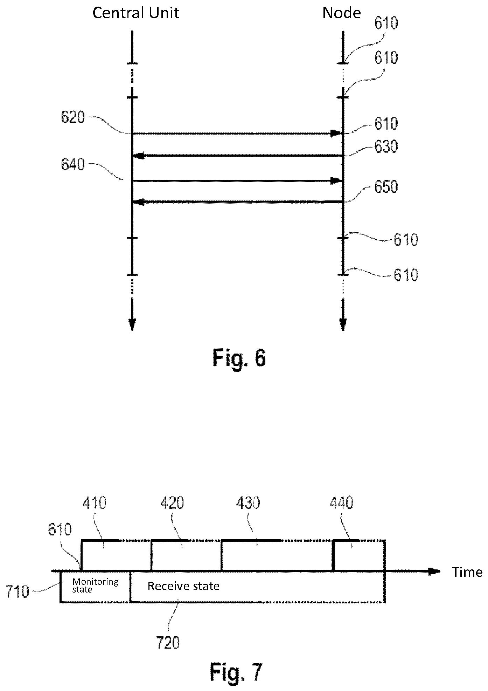

In Fig. 6 the signalling flow in relation to a wakeup node is shown. The wakeup node will wake from a sleep state into a monitoring state in wakeup slots 610, and monitor 710 a radio channel for information at periodic intervals. The time between two consecutive wakeup slots 610 is defined as the wakeup interval. The monitoring 710 is done by determining if there is a signal present in a monitored radio bandwidth. The received signal is represented by a Receiver Signal Strength Indicator, RSSI. The monitored radio bandwidth may be a predetermined, but configurable, radio channel. The monitoring 710 will be explained in further detail in coming sections.

If no signal is detected, the wakeup node is configured to revert to a low power mode, e.g. a sleep or hibernate mode in order to conserve power. It will stay in this mode until it is time to wake up again and monitor 710 the channel for a signal, i.e. it will sleep for substantially the entire duration of the wakeup interval apart from the time spent monitoring the radio channel. The Central Unit 110 and the wakeup nodes are synchronized. If the Central Unit has information to send, it will send a wakeup message 620 during a wakeup slot 610. The wakeup node will be monitoring 710 the channel since the wakeup message 620 is sent during a wakeup slot 610, and will consequently detect a signal in the channel. The wakeup node will receive 720 the wakeup message 620, decrypt and analyse the wakeup message 620, as will be explained in more detail in later sections, and will send a wakeup acknowledgement 630. The Central Unit 110 receives the wakeup acknowledgement 630 and proceeds to send an information message 640 to the wakeup node. The wakeup node receives, decodes, and analyses the information message 640, and the signalling session is concluded by the wakeup node sending an information acknowledgement 650 to the Central Unit 110.

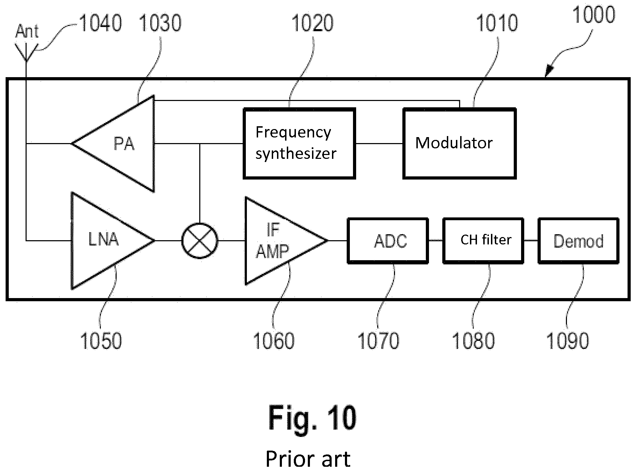

Referring to Fig. 7, the behaviour of a wakeup node in relation to a wakeup slot 610 will now be explained. The wakeup node is in a monitoring state 710 at the start of the wakeup slot 610 (as will be explained further below with reference to Figure 10). Generally, wakeup nodes will use transceivers rather than separate transmitters and receivers because transceivers may be smaller and cheaper than a corresponding transmitter receiver pair. The wakeup node may optionally (as shown in Fig. 7) enter the monitoring state prior to the wakeup interval 610, rather than at the start of the wakeup interval, in order to compensate for e.g. clock inaccuracy and/or drift of a timing reference of the wakeup node. Also, it is necessary for the receiver of the wakeup node to have reached a stable state, after being powered up into the monitoring state from the sleep state, for the start of the wakeup slot 610 and this may require that the receiver be powered up a little in advance of the start of the wakeup slot 610. If a relevant packet 400 is occupying the channel, the pre-amble 410 of the packet will start at the start of the wakeup interval 610. The wakeup node will, when it is in the monitoring 710 state, detect the pre-amble as an RSSI level above a predetermined configurable RSSI threshold. If there is no signal above the RSSI threshold, the wakeup node will go back to the sleep or hibernate state with the receiver fully powered down (and without the receiver having been fully powered up) until the next wakeup slot 610. If a signal is detected during the monitoring 710 of the channel, the wakeup node will switch to a receive state 720, detect the pre-amble 410 and the following sync word 420, and proceed to receive the complete packet 400.

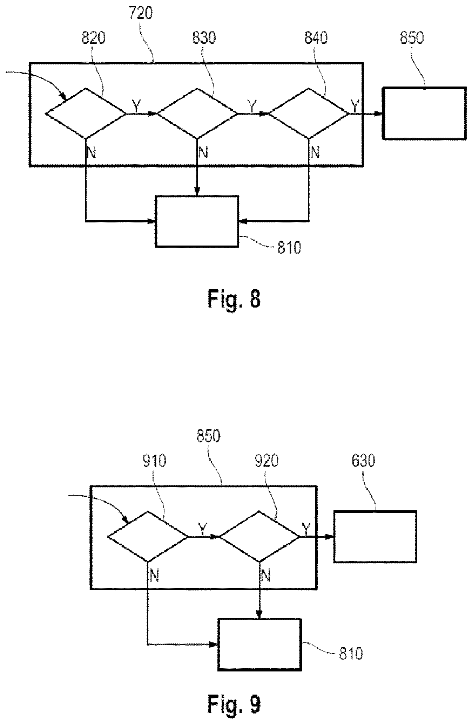

The receive state 720 will be described further with reference to Fig. 8. When in the receive state 720, the wakeup node may optionally be configured to perform pre-amble qualification 820, and if no pre-amble 410 is detected, directly exit the receive state 720 and go back to the sleep or hibernate state 810. Further, and still optionally, the wakeup node may be configured to perform sync word qualification 830, and if no sync word 420 is detected, directly exit the receive state 720 and go back to the sleep or hibernate state 810. Further and also optionally, the wakeup node may be configured to perform CRC qualification 840 on the received packet 400 and if the CRC 440 is not correct, directly exit the receive state 720 and go back to the sleep or hibernate state 610. Note that all the steps in relation to the receive state 720 described in Fig. 8 are mutually optional and may be combined in any foreseeable manner. Thereafter, the wakeup node will, if it is not going back to the sleep or hibernate state 810, move on to packet analysis 850.

Packet analysis 850 involves decryption 910 of the payload 430 of the packet 400, if the decryption 910 fails, i.e. the payload does not conform to an agreed format etc. the wakeup node will directly exit the packet analysis state 850 and go back to the sleep or hibernate state 810. If the decryption 910 is successful the wakeup node will perform recipient analysis 920. The recipient analysis 920 comprises analysing address identifiers of the payload 430 of the packet 400 to see if the wakeup node is one of the intended recipients for the wakeup message 620. If the wakeup node is not one of the intended recipients, the wakeup node will directly exit the packet analysis state 850 and go back to the sleep or hibernate state 810. If the wakeup node is one of the intended recipients, it will send a wakeup acknowledgement 630 confirming reception of the wakeup message 620. It may optionally, depending on the configuration of the communication protocol and/or the Central Unit, go to the sleep or hibernate state for a predetermined period of time before waking up again to receive the information message 640 from the Central Unit. The optional sleep or hibernate state 810 between the transmission of the wakeup acknowledgement 630 and reception of the information message 640 may depend on the number of intended recipients of the wakeup message 620. If there is only one intended recipient, the information message 640 may be sent by the Central Unit 110 shortly after receiving the wakeup acknowledgement 630 from the wakeup node. However, if there are a plurality of intended recipients of the wakeup message 620, there may be a, configurable, predetermined time before the information message 640 is sent. This time is preferably a time based on an integer multiple of the wakeup period, e.g. the information message will be sent at a later wakeup slot than the wakeup slot in which the wakeup message was received.

Fig. 10 is a simplified block diagram of one embodiment of a prior art RF transceiver 800. The transceiver 1000 comprise a transmit path from a modulator block (1010), through a frequency synthesizer block (1020), a mixer block (not shown) and a PA (Power Amplifier) block (1030) to an antenna (1040). The transceiver 800 also comprises a receive path from the antenna (1040) through an LNA (Low Noise Amplifier) block (1050), the mixer block, an IF amplifier block (1060), an ADC (Analogue to Digital Converter) block (1070), a CH (Channel) filter block (1080) and a demodulator block (1090).

The transceiver 800 may comprise much more functionality e.g. a processing unit, a power management unit, a memory, additional filtering etc. The different parts of the transceiver 1000 are controlled either externally through a suitable interface or from an internal controller or processing unit.

Note that the transceiver 1000, as described with reference to Fig. 10, is prior art and shows one embodiment of a typical transceiver. The transceiver 1000 is included in the description simply to clarify that the methods, steps and systems described in this disclosure may be possible to implement without adding additional hardware. The skilled person understands that there are many different topologies for transceivers and vendor specific implementations that will allow for slight modification of the steps and states described above.

The transceiver 1000 in Fig. 10 will be used to further explain how the different states in e.g. Fig. 7 and Fig. 8 may relate to actual hardware. The monitoring state 710 is the lowest power active state (as distinct from the sleep or hibernate state) where the transceiver will be configured to consume the least amount of power. This may be achieved by having only minimum functionality enabled and powered in the transceiver 1000. In order to detect a RF signal it may be sufficient to use only the LNA block and detect a received signal strength either e.g. after the LNA block or as a function of the current consumption of the LNA block. Monitoring in this way will provide an indication if there is RF power anywhere within the operating bandwidth of the LNA block. This is an alternative approach to using RSSI detection. Slightly higher power consumption may be traded off in order to get an RF power estimate within the selected channel. This may be done by detecting power at the output of the channel filter before the demodulator block, e.g. detecting the power of a signal without actually demodulating the signal.

The receive state 720 involves a straight forward demodulation of the received signal where all relevant blocks in the receive path are active. The steps and states described with reference to Fig. 8 and Fig. 9 may be executed or controlled by e.g. settings in the demodulator block or done by an external or internal processing unit or controller in communication with the transceiver 1000.

It should be noted that the signalling described in relation to a non-wakeup node may very well be performed by a wakeup node, but the signalling described in relation to a wakeup node cannot be performed by a non-wakeup node.

The RSSI threshold is, in one embodiment, an absolute value.

The RSSI threshold is, in another embodiment, a relative value relating to e.g. a background noise of the channel or a moving average of the background noise of the channel. The moving average may be acquired over a configurable period of time and will consequently change if the background noise is changing. In either case, the relative value will have the RSSI threshold defined as a signal to noise ratio.

In one embodiment of the wakeup node, the wakeup node wakes up and listens for a signal during one wakeup slot, and if there is a signal, starts receiving in the second wakeup slot. This approach may be used if the RSSI evaluation takes too long or is performed by auxiliary low power circuitry (for example a wake-up radio receiver that consumes considerably less power than the transceiver and that wakes the transceiver in the event that the RSSI has been evaluated as above threshold) without powering up (energising or activating) the transceiver at all and the transceiver start up (following a positive RSSI result) takes too long. Too long in the sense that it is not possible to perform RSSI evaluation and detect the pre-amble (which the receiver locks onto to get the frequency and bit-synchronisation) with the receiver within the timespan of one packet (wakeup message).

The embodiments of the invention that have been described so far have involved synchronously turning on part only of the transceiver to perform RSSI detection and threshold comparison, and in the event that the detected RSSI level is above threshold powering up (energising, activating) the other parts of the transceiver necessary to demodulate the received signal where all relevant blocks in the receive path are active. But alternative arrangements are possible, such as using a separate low power wake-up radio module to determine the RSSI level, the main transceiver being woken to the receive state in the event that the RSSI is above threshold: in such an arrangement the low power wake-up receiver would itself be woken synchronously. Depending upon the design of the low power wake-up receiver, satisfactory range and satisfactorily low power consumption should be achievable - albeit at the cost of additional components in the wake up nodes.

In one embodiment of the wakeup node, the wakeup node only listens to every nth wake up slot 610. Where n is a configurable positive integer equal to or greater than 1.

In an embodiment in the event that more than one node is being woken up, the nodes that have been woken use a listen before talk (LBT) protocol before sending wakeup acknowledgements to avoid collision between wakeup acknowledgements.

Note that the transceiver 1000, as described with reference to Fig. 10, is prior art and shows one embodiment of a typical transceiver. The transceiver 1000 is included in the description simply to clarify that the methods, steps and systems described in this disclosure may be possible to implement without adding additional hardware. The skilled person understands that there are many different topologies for transceivers and vendor specific implementations that will allow for slight modification of the steps and states described above.

The transceiver 1000 in Fig. 10 will be used to further explain how the different states in e.g. Fig. 7 and Fig. 8 may relate to actual hardware. The monitoring state 710 is the lowest power active state (as distinct from the sleep or hibernate state) where the transceiver will be configured to consume the least amount of power. This may be achieved by having only minimum functionality enabled and powered in the transceiver 1000. In order to detect a RF signal it may be sufficient to use only the LNA block and detect a received signal strength either e.g. after the LNA block or as a function of the current consumption of the LNA block. Monitoring in this way will provide an indication if there is RF power anywhere within the operating bandwidth of the LNA block. This is an alternative approach to using RSSI detection. Slightly higher power consumption may be traded off in order to get an RF power estimate within the selected channel. This may be done by detecting power at the output of the channel filter before the demodulator block, e.g. detecting the power of a signal without actually demodulating the signal.

The receive state 720 involves a straight forward demodulation of the received signal where all relevant blocks in the receive path are active. The steps and states described with reference to Fig. 8 and Fig. 9 may be executed or controlled by e.g. settings in the demodulator block or done by an external or internal processing unit or controller in communication with the transceiver 1000. It should be noted that the signalling described in relation to a non-wakeup node may very well be performed by a wakeup node, but the signalling described in relation to a wakeup node cannot be performed by a non-wakeup node.

The RSSI threshold is, in one embodiment, an absolute value.

The RSSI threshold is, in another embodiment, a relative value relating to e.g. a background noise of the channel or a moving average of the background noise of the channel. The moving average may be acquired over a configurable period of time and will consequently change if the background noise is changing. In either case, the relative value will have the RSSI threshold defined as a signal to noise ratio.

In one embodiment of the wakeup node, the wakeup node wakes up and listens for a signal during one wakeup slot, and if there is a signal, starts receiving in the second wakeup slot. This approach may be used if the RSSI evaluation takes too long or is performed by auxiliary low power circuitry (for example a wake-up radio receiver that consumes considerably less power than the transceiver and that wakes the transceiver in the event that the RSSI has been evaluated as above threshold) without powering up (energising or activating) the transceiver at all and the transceiver start up (following a positive RSSI result) takes too long. Too long in the sense that it is not possible to perform RSSI evaluation and detect the pre-amble (which the receiver locks onto to get the frequency and bit-synchronisation) with the receiver within the timespan of one packet (wakeup message).

The embodiments of the invention that have been described so far have involved synchronously turning on part only of the transceiver to perform RSSI detection and threshold comparison, and in the event that the detected RSSI level is above threshold powering up (energising, activating) the other parts of the transceiver necessary to demodulate the received signal where all relevant blocks in the receive path are active. But alternative arrangements are possible, such as using a separate low power wake-up radio module to determine the RSSI level, the main transceiver being woken to the receive state in the event that the RSSI is above threshold: in such an arrangement the low power wake-up receiver would itself be woken synchronously. Depending upon the design of the low power wake-up receiver, satisfactory range and satisfactorily low power consumption should be achievable - albeit at the cost of additional components in the wake up nodes.

In one embodiment of the wakeup node, the wakeup node only listens to every nth wake up slot 610. Where n is a configurable positive integer equal to or greater than 1.

In an embodiment in the event that more than one node is being woken up, the nodes that have been woken use a listen before talk (LBT) protocol before sending wakeup acknowledgements to avoid collision between wakeup acknowledgements.

**Claims**

1. A node for a security monitoring system, said system comprising a central unit and a plurality of nodes, the node comprising a radio communication module (340) and a controller (350) operatively connected to the radio communication module (340),

     the radio communication module (340) having a plurality of elements that are used in receiving and demodulating radio signals,
     the node being configured to:
     operate the radio communication module (340) in a receive state, to receive and demodulate a packet, the packet including a payload; wherein:

          a first subset of the plurality of elements is operable to receive a radio signal and detect an RSSI level in the received radio signal, and a second subset of the plurality of elements is operable to demodulate the received radio signal, the radio communication module (340) being configured to operate in the receive state, in which both the first and second subset of elements are energised, and in a monitoring state in which the first but not the second subset of elements are energised, the power consumption of the radio communication module (340) being greater in the receive state than in the monitoring state;
the node further being configured to:

operate the radio communication module (340) in the monitoring state to detect an RSSI level and compare the RSSI level to an RSSI threshold, and if the RSSI level is above the RSSI threshold, change the radio communication module (340) to the receive state,
perform packet analysis involving decryption of the packet payload and, if the decryption is successful, analysis of address identifiers of the packet payload to determine whether the node is an intended recipient of the packet,
and, if the packet is a wakeup message from the central unit (110) with the node as an intended recipient, the node is further configured to transmit, to the central unit (110), a wakeup acknowledgement;
wherein the radio communication module (340) has a sleep state in which it consumes less power than in the monitoring state, and the node is configured periodically to cause the radio communication module (340) to enter the monitoring state from the sleep state.

2. The node as claimed in claim 1, wherein the node is configured to change the radio communication module (340) from the monitoring state to the sleep state in the event that the RSSI level is below the RSSI threshold.

3. The node of claim 1 or claim 2, wherein node is further configured in the receive state to perform preamble qualification on the received packet and if no preamble is qualified, the node is configured to change to the sleep state.

4. The node of any one of the preceding claims, wherein the node is further configured to perform sync word qualification on the received packet and if no sync word is qualified, the node is configured to change to the sleep state.

5. The node of any one of the preceding claims, wherein the node is further configured to perform Cyclic Redundancy Check, CRC, qualification on the received packet and if no CRC is qualified, the node is configured to change to the sleep state.

6. The node according to any one of the preceding claims, wherein the RSSI threshold is a level relative to a background noise.

7. The node according to claim 6, wherein the RSSI threshold is a level relative to a moving average of the background noise.

8. The node as claimed in any one of the preceding claims, wherein the radio communication module (340) comprises a wake-up radio unit and a transceiver, the node being configured to:

operate the radio communication module (340) in the monitoring state using the wake-up unit; and
operate the radio communication module (340) in the receive state using the transceiver.

9. The node as claimed in any one of the preceding claims, wherein the radio communication module (340) operates within the 863 to 870MHz frequency band.

10. The node as claimed in any one of the preceding claims, further comprising at least one sensor.

11. A security monitoring system comprising a central unit (110) including a radio frequency transceiver (230, 232, 234, 240, 244), and a controller (250) for controlling the radio frequency transceiver, and a plurality of nodes (114, 116, 118, 125, 126) as claimed in any one of the preceding claims;
the central unit (110) being configured to:

transmit periodic wake up messages to the nodes (114, 116, 118, 125, 126), each wake up message including an identifier to indicate the intended recipient(s) of the message; and
in response to receipt of a wake up acknowledgement from a node, transmit an information message to the node (114, 116, 118, 125, 126) from which the wake up acknowledgement was received.

12. A method of operating a node in a security monitoring system, said system comprising a central unit (110) and a plurality of nodes, the node (114, 116, 118, 125, 126) comprising a radio communication module 340 and a controller (350) operatively connected to the radio communication module (340),

the radio communication module (340) having a plurality of elements that are used in receiving and demodulating radio signals, the method comprising operating the radio communication module (340) in a receive state, to receive and demodulate a packet, the packet including a payload;

wherein a first subset of the plurality of elements is operable to receive a radio signal and detect an RSSI level in the received radio signal, and a second subset of the plurality of elements is operable to demodulate the received radio signal, the radio communication module (340) being configured to operate in the receive state, in which both the first and second subset of elements are energised, and in a monitoring state in which the first but not the second subset of elements are energised, the power consumption of the radio communication module (340) being greater in the receive state than in the monitoring state;

wherein the radio communication module (340) has a sleep state in which it consumes less power than in the monitoring state, and the node is configured periodically to cause the radio communication module (340) to enter the monitoring state from the sleep state;

the method further comprising:

operating the radio communication module (340) in the monitoring state to detect an RSSI level and compare the RSSI level to an RSSI threshold, and

if the RSSI level is above the RSSI threshold, changing the radio communication module (340) to the receive state,

performing packet analysis involving decryption of the packet payload and, if the decryption is successful, analysis of address identifiers of the packet payload to determine whether the node is an intended recipient of the packet,

and,

if the packet is a wakeup message from the central unit (110) with the node as an intended recipient, transmitting to the central unit (110) a wakeup acknowledgement.

13. The method of claim 12, the method further comprising changing the radio communication module (340) from the monitoring state to the sleep state in the event that the RSSI level is below the RSSI threshold.

14. The method of claim 12, the method further comprising, in the receive state, performing preamble qualification on the received packet and if no preamble is qualified, changing the node to the sleep state.

15. The method of claim 12, the method further comprising performing sync word qualification on the received packet and if no sync word is qualified, changing the node to the sleep state.

16. The method of claim 12, the method further comprising performing Cyclic Redundancy Check, CRC, qualification on the received packet and if no CRC is qualified, changing the node to the sleep state.

**Patentansprüche**

1. Knoten für ein Sicherheitsüberwachungssystem, wobei das System eine Zentraleinheit und eine Vielzahl von Knoten umfasst, wobei der Knoten ein Funkkommunikationsmodul (340) und eine Steuerung (350), die betriebsfähig mit dem Funkkommunikationsmodul (340) verbunden ist, umfasst,

wobei das Funkkommunikationsmodul (340) eine Vielzahl von Elementen aufweist, die zum Empfangen und Demodulieren von Funksignalen verwendet werden,

wobei der Knoten dazu konfiguriert ist:

das Funkkommunikationsmodul (340) in einem Empfangszustand zu betreiben, um ein Paket zu empfangen und zu demodulieren, wobei das Paket eine Nutzlast beinhaltet; wobei:

ein erster Untersatz der Vielzahl von Elementen dazu betriebsfähig ist, ein Funksignal zu empfangen und einen RSSI-Pegel in dem empfangenen Funksignal zu detektieren, und ein zweiter Untersatz der Vielzahl von Elementen dazu betriebsfähig ist, das empfangene Funksignal zu demodulieren, wobei das Funkkommunikationsmodul (340) dazu konfiguriert ist, in dem Empfangszustand, in dem sowohl der erste als auch der zweite Untersatz von Elementen mit Energie versorgt wird, und in einem Überwachungszustand, in dem der erste, aber nicht der zweite Untersatz von Elementen mit Energie versorgt wird, betrieben zu werden, wobei der Stromverbrauch des Funkkommunikationsmoduls (340) in dem Empfangszustand größer ist als in dem Überwachungszustand;

wobei der Knoten ferner dazu konfiguriert ist:

das Funkkommunikationsmodul (340) in dem Überwachungszustand zu betreiben, um einen RSSI-Pegel zu detektieren und den RSSI-Pegel mit einem RSSI-Schwellenwert zu vergleichen, und wenn der RSSI-Pegel über dem RSSI-Schwellenwert liegt, das Funkkommunikationsmodul (340) in den Empfangszustand zu wechseln,

eine Paketanalyse, die eine Entschlüsselung der Paketnutzlast einschließt, und, wenn die Entschlüsselung erfolgreich ist, eine Analyse von Adresskennungen der Paketnutzlast durchzuführen, um zu bestimmen, ob der Knoten ein beabsichtigter Empfänger des Pakets ist,

und, wenn das Paket eine Aufwecknachricht von der Zentraleinheit (110) mit dem Knoten als einem beabsichtigten Empfänger ist, der Knoten ferner dazu konfiguriert ist, eine Aufweckbestätigung an die Zentraleinheit (110) zu übertragen;

wobei das Funkkommunikationsmodul (340) einen Schlafzustand aufweist, in dem es weniger Strom verbraucht als in dem Überwachungszustand, und der Knoten dazu konfiguriert ist, periodisch zu veranlassen, dass das Funkkommunikationsmodul (340) aus dem Schlafzustand in den Überwachungszustand eintritt.

2. Knoten wie in Anspruch 1 beansprucht, wobei der Knoten dazu konfiguriert ist, das Funkkommunikationsmodul (340) in dem Fall, dass der RSSI-Pegel unter dem RSSI-Schwellenwert liegt, aus dem Überwachungszustand in den Schlafzustand zu wechseln.

3. Knoten nach Anspruch 1 oder Anspruch 2, wobei der Knoten ferner dazu konfiguriert ist, in dem Empfangszustand eine Präambelqualifikation an dem empfangenen Paket durchzuführen, und, wenn keine Präambel qualifiziert wird, der Knoten dazu konfiguriert ist, in den Schlafzustand zu wechseln.

4. Knoten nach einem der vorhergehenden Ansprüche, wobei der Knoten ferner dazu konfiguriert ist, eine Sync-Wort-Qualifikation an dem empfangenen Paket durchzuführen, und, wenn kein Sync-Wort qualifiziert wird, der Knoten dazu konfiguriert ist, in den Schlafzustand zu wechseln.

5. Knoten nach einem der vorhergehenden Ansprüche, wobei der Knoten ferner dazu konfiguriert ist, eine Zyklische-Redundanzprüfung(CRC)-Qualifikation an dem empfangenen Paket durchzuführen, und wenn keine CRC qualifiziert wird, der Knoten dazu konfiguriert ist, in den Schlafzustand zu wechseln.

6. Knoten nach einem der vorhergehenden Ansprüche, wobei der RSSI-Schwellenwert ein Pegel relativ zu einem Hintergrundrauschen ist.

7. Knoten nach Anspruch 6, wobei der RSSI-Schwellenwert ein Pegel relativ zu einem sich bewegenden Durchschnitt des Hintergrundrauschens ist.

8. Knoten wie in einem der vorhergehenden Ansprüche beansprucht, wobei das Funkkommunikationsmodul (340) eine Aufweckfunkeinheit und einen Sender-Empfänger umfasst, wobei der Knoten dazu konfiguriert ist:

das Funkkommunikationsmodul (340) in dem Überwachungszustand unter Verwendung der Aufweckeinheit zu betreiben; und

das Funkkommunikationsmodul (340) in dem Empfangszustand unter Verwendung des Sender-Empfängers zu betreiben.

9. Knoten wie in einem der vorhergehenden Ansprüche beansprucht, wobei das Funkkommunikationsmodul (340) innerhalb des Frequenzbandes von 863 bis 870 MHz betrieben wird.

10. Knoten wie in einem der vorhergehenden Ansprüche beansprucht, ferner umfassend mindestens einen Sensor.

11. Sicherheitsüberwachungssystem, umfassend eine Zentraleinheit (110), die einen Funkfrequenz-Sender-Empfänger (230, 232, 234, 240, 244) und eine Steuerung (250) zum Steuern des Funkfrequenz-Sender-Empfängers beinhaltet, und eine Vielzahl von Knoten (114, 116, 118, 125, 126), wie in einem der vorhergehenden Ansprüche beansprucht;

wobei die Zentraleinheit (110) dazu konfiguriert ist:

periodische Aufwecknachrichten an die Knoten (114, 116, 118, 125, 126) zu übertragen, wobei jede Aufwecknachricht eine Kennung beinhaltet, um den/die beabsichtigte(n) Empfänger der Nachricht anzugeben; und als Antwort auf einen Empfang einer Aufweckbestätigung von einem Knoten eine Informationsnachricht an den Knoten (114, 116, 118, 125, 126) zu übertragen, von dem die Aufweckbestätigung empfangen wurde.

12. Verfahren zum Betreiben eines Knotens in einem Sicherheitsüberwachungssystem, wobei das System eine Zentraleinheit (110) und eine Vielzahl von Knoten (114, 116, 118, 125, 126) umfasst, wobei der Knoten ein Funkkommunikationsmodul (340) und eine Steuerung (350), die betriebsfähig mit dem Funkkommunikationsmodul (340) verbunden ist, umfasst,

wobei das Funkkommunikationsmodul (340) eine Vielzahl von Elementen aufweist, die zum Empfangen und Demodulieren von Funksignalen verwendet werden, wobei das Verfahren das Betreiben des Funkkommunikationsmoduls (340) in einem Empfangszustand umfasst, um ein Paket zu empfangen und zu demodulieren, wobei das Paket eine Nutzlast beinhaltet;
wobei ein erster Untersatz der Vielzahl von Elementen dazu betriebsfähig ist, ein Funksignal zu empfangen und einen RSSI-Pegel in dem empfangenen Funksignal zu detektieren, und ein zweiter Untersatz der Vielzahl von Elementen dazu betriebsfähig ist, das empfangene Funksignal zu demodulieren, wobei das Funkkommunikationsmodul (340) dazu konfiguriert ist, in dem Empfangszustand, in dem sowohl der erste als auch der zweite Untersatz von Elementen mit Energie versorgt wird, und in einem Überwachungszustand, in dem der erste, aber nicht der zweite Untersatz von Elementen mit Energie versorgt wird, betrieben zu werden, wobei der Stromverbrauch des Funkkommunikationsmoduls (340) in dem Empfangszustand größer ist als in dem Überwachungszustand;
wobei das Funkkommunikationsmodul (340) einen Schlafzustand aufweist, in dem es weniger Strom verbraucht als in dem Überwachungszustand, und der Knoten dazu konfiguriert ist, periodisch zu veranlassen, dass das Funkkommunikationsmodul (340) aus dem Schlafzustand in den Überwachungszustand eintritt;
das Verfahren ferner umfassend:

Betreiben des Funkkommunikationsmoduls (340) in dem Überwachungszustand, um einen RSSI-Pegel zu detektieren und den RSSI-Pegel mit einem RSSI-Schwellenwert zu vergleichen, und,
wenn der RSSI-Pegel über dem RSSI-Schwellenwert liegt, das Funkkommunikationsmodul (340) in den Empfangszustand zu wechseln,
Durchführen einer Paketanalyse, die eine Entschlüsselung der Paketnutzlast einschließt, und, wenn die Entschlüsselung erfolgreich ist, einer Analyse von Adresskennungen der Paketnutzlast, um zu bestimmen, ob der Knoten ein beabsichtigter Empfänger des Pakets ist,
und,
wenn das Paket eine Aufwecknachricht von der Zentraleinheit (110) mit dem Knoten als einem beabsichtigten Empfänger ist,
Übertragen einer Aufweckbestätigung an die Zentraleinheit (110).

13. Verfahren nach Anspruch 12, das Verfahren ferner umfassend in dem Fall, dass der RSSI-Pegel unter dem RSSI-Schwellenwert liegt, Wechseln des Funkkommunikationsmoduls (340) aus dem Überwachungszustand in den Schlafzustand.

14. Verfahren nach Anspruch 12, das Verfahren in dem Empfangszustand ferner umfassend Durchführen einer Präambelqualifikation an dem empfangenen Paket, und, wenn keine Präambel qualifiziert wird, Wechseln des Knotens in den Schlafzustand.

15. Verfahren nach Anspruch 12, das Verfahren ferner umfassend Durchführen einer Sync-Wort-Qualifikation an dem empfangenen Paket und, wenn kein Sync-Wort qualifiziert wird, Wechseln des Knotens in den Schlafzustand.

16. Verfahren nach Anspruch 12, das Verfahren ferner umfassend Durchführen einer Zyklische-Redundanzprüfung(CRC)-Qualifikation an dem empfangenen Paket und, wenn keine CRC qualifiziert wird, Wechseln des Knotens in den Schlafzustand.

**Revendications**

1. Nœud pour un système de surveillance de sécurité, ledit système comprenant une unité centrale et une pluralité de nœuds, le nœud comprenant un module de communication radio (340) et un contrôleur (350) relié fonctionnellement au module de communication radio (340),

le module de communication radio (340) ayant une pluralité d'éléments qui sont utilisés pour recevoir et démoduler des signaux radio,
le nœud étant configuré pour :

faire fonctionner le module de communication radio (340) dans un état de réception, afin de recevoir et démoduler un paquet, le paquet incluant une charge utile ; dans lequel :
un premier sous-ensemble de la pluralité d'éléments est apte à recevoir un signal radio et à détecter un niveau RSSI dans le signal radio reçu, et un deuxième sous-ensemble de la pluralité d'éléments est apte à démoduler le signal radio reçu, le module de communication radio (340) étant configuré pour fonctionner dans l'état de réception, dans lequel les premier et deuxième sous-ensembles d'éléments sont tous deux alimentés, et dans un état de surveillance dans lequel le premier sous-ensemble mais pas le deuxième sous-ensemble d'éléments est alimenté, la consommation d'énergie du module de communication radio (340) étant plus élevée dans l'état de réception que dans l'état de surveillance ;
le nœud étant en outre configuré pour :

faire fonctionner le module de communication radio (340) dans l'état de surveillance afin de détecter un niveau RSSI et de comparer le niveau RSSI à un seuil RSSI, et si le niveau RSSI est supérieur au seuil RSSI, passer le module de communication radio (340) vers l'état de réception,
mettre en œuvre une analyse de paquet comportant le déchiffrement de la charge utile du paquet et, si le déchiffrement est réussi, l'analyse des identifiants d'adresse de la charge utile du paquet afin de déterminer si le nœud est un destinataire prévu du paquet,
et, si le paquet est un message de réveil provenant de l'unité centrale (110) avec le nœud comme destinataire prévu, le nœud est en outre configuré pour transmettre, à l'unité centrale (110), un accusé de réveil ;
dans lequel le module de communication radio (340) présente un état de sommeil dans lequel il consomme moins d'énergie que dans l'état de surveillance, et le nœud est configuré pour amener périodiquement le module de communication radio (340) à entrer dans l'état de surveillance depuis l'état de sommeil.

2. Nœud selon la revendication 1, dans lequel le nœud est configuré pour passer le module de communication radio (340) de l'état de surveillance à l'état de sommeil dans le cas où le niveau RSSI est inférieur au seuil RSSI.

3. Nœud selon la revendication 1 ou de la revendication 2, dans lequel le nœud est en outre configuré, dans l'état de réception, pour mettre en œuvre une qualification de préambule sur le paquet reçu et, si aucun préambule n'est qualifié, le nœud est configuré pour passer à l'état de sommeil.

4. Nœud selon l'une quelconque des revendications précédentes, dans lequel le nœud est en outre configuré pour mettre en œuvre une qualification de mot de synchronisation sur le paquet reçu et, si aucun mot de synchronisation n'est qualifié, le nœud est configuré pour passer à l'état de sommeil.

5. Nœud selon l'une quelconque des revendications précédentes, dans lequel le nœud est en outre configuré pour mettre en œuvre une qualification de contrôle de redondance cyclique, CRC, sur le paquet reçu et, si aucun CRC n'est qualifié, le nœud est configuré pour passer à l'état de sommeil.

6. Nœud selon l'une quelconque des revendications précédentes, dans lequel le seuil RSSI est un niveau relatif à un bruit de fond.

7. Nœud selon la revendication 6, dans lequel le seuil RSSI est un niveau relatif à une moyenne mobile du bruit de fond.

8. Nœud selon l'une quelconque des revendications précédentes, dans lequel le module de communication radio (340) comprend une unité radio de réveil et un émetteur-récepteur, le nœud étant configuré pour :

faire fonctionner le module de communication radio (340) dans l'état de surveillance à l'aide de l'unité de réveil ; et
faire fonctionner le module de communication radio (340) dans l'état de réception à l'aide de l'émetteur-récepteur.

9. Nœud selon l'une quelconque des revendications précédentes, dans lequel le module de communication radio (340) fonctionne dans la plage de fréquences comprise entre 863 et 870 MHz.

10. Nœud selon l'une quelconque des revendications précédentes, comprenant en outre au moins un capteur.

11. Système de surveillance de sécurité comprenant une unité centrale (110) incluant un émetteur-récepteur radiofréquence (230, 232, 234, 240, 244) et un contrôleur (250) destiné à commander l'émetteur-récepteur radiofréquence, et une pluralité de nœuds (114, 116, 118, 125, 126) selon l'une quelconque des revendications précédentes ;
l'unité centrale (110) étant configurée pour :

transmettre des messages de réveil périodiques aux nœuds (114, 116, 118, 125, 126), chaque message de réveil incluant un identifiant destiné à indiquer le(s) destinataire(s) prévu(s) du message ; et
en réponse à la réception d'un accusé de réveil provenant d'un nœud, transmettre un message d'information audit nœud (114, 116, 118, 125, 126) à partir duquel l'accusé de réveil a été reçu.

12. Procédé de fonctionnement d'un nœud dans un système de surveillance de sécurité, ledit système comprenant une unité centrale (110) et une pluralité de nœuds, le nœud (114, 116, 118, 125, 126) comprenant un module de communication radio (340) et un contrôleur (350) relié fonctionnellement au module de communication radio (340),

le module de communication radio (340) présentant une pluralité d'éléments qui sont utilisés pour recevoir et démoduler des signaux radio, le procédé comprenant le fonctionnement du module de communication radio (340) dans un état de réception, afin de recevoir et démoduler un paquet, le paquet incluant une charge utile ;
dans lequel un premier sous-ensemble de la pluralité d'éléments est apte à recevoir un signal radio et à détecter un niveau RSSI dans le signal radio reçu, et un deuxième sous-ensemble de la pluralité d'éléments est apte à démoduler le signal radio reçu, le module de communication radio (340) étant configuré pour fonctionner dans l'état de réception, dans lequel les premier et deuxième sous-ensembles d'éléments sont tous deux alimentés, et dans un état de surveillance dans lequel le premier mais non le deuxième sous-ensemble d'éléments est alimenté, la consommation d'énergie du module de communication radio (340) étant plus élevée dans l'état de réception que dans l'état de surveillance ;
dans lequel le module de communication radio (340) présente un état de sommeil dans lequel il consomme moins d'énergie que dans l'état de surveillance, et le nœud est configuré pour amener périodiquement le module de communication radio (340) à entrer dans l'état de surveillance à partir de l'état de sommeil ;
le procédé comprenant en outre :

le fonctionnement du module de communication radio (340) dans l'état de surveillance afin de détecter un niveau RSSI et de comparer le niveau RSSI à un seuil RSSI, et
si le niveau RSSI est supérieur au seuil RSSI, le passage du module de communication radio (340) vers l'état de réception,
la mise en œuvre d'une analyse de paquet comportant le déchiffrement de la charge utile du paquet et, si le déchiffrement est réussi, l'analyse des identifiants d'adresse de la charge utile du paquet afin de déterminer si le nœud est un destinataire prévu du paquet,
et,
si le paquet est un message de réveil provenant de l'unité centrale (110) avec le nœud comme destinataire prévu,
la transmission à l'unité centrale (110) d'un accusé de réveil.

13. Procédé selon la revendication 12, le procédé comprenant en outre le passage du module de communication radio (340) de l'état de surveillance vers l'état de sommeil dans le cas où le niveau RSSI est inférieur au seuil RSSI.

14. Procédé selon la revendication 12, le procédé comprenant en outre, dans l'état de réception, la mise en œuvre d'une qualification de préambule sur le paquet reçu et, si aucun préambule n'est qualifié, le passage du nœud à l'état de sommeil.

15. Procédé selon la revendication 12, le procédé comprenant en outre la mise en œuvre d'une qualification de mot de synchronisation sur le paquet reçu et, si aucun mot de synchronisation n'est qualifié, le passage du nœud à l'état de sommeil.

16. Procédé selon la revendication 12, le procédé comprenant en outre la mise en œuvre d'une qualification de contrôle de redondance cyclique, CRC, sur le paquet reçu et, si aucun CRC n'est qualifié, le passage du nœud à l'état de sommeil.

Fig. 1

**Fig. 2**

Fig. 3

Fig. 4

Fig. 5

**Fig. 6**

**Fig. 7**

Fig. 8

Fig. 9

**Fig. 10**
Prior art

**EP 3 841 675 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2663128 A
- US 2010079278 A1

- WO 2009044368 A2

**Non-patent literature cited in the description**

- A 2.4GHz BLE-compliant fully-integrated wakeup receiver for latency-critical IoT applications using a 2-dimensional wakeup pattern in 90nm CMOS. **DING MING et al.** 2017 IEEE RADIO FREQUENCY INTEGRATED CIRCUITS SYMPOSIUM (RFIC. IEEE, 04 June 2017, 168-171

- **HAMOOD SHEHAB HAMID et al.** Analyze BER Performance of Wireless FSK System. *Microwaves & RF*, November 2009, vol. 48 (11), 80